# EUROPEAN PATENT APPLICATION

(11) **EP 3 069 970 A1**
(43) Date of publication of application: **21.09.2016**
(21) Application number: 14862505.6
(22) Date of filing: 24.06.2014
(51) Int. Cl.: B62J 6/00, B60Q 1/34, B62J 99/00

(54) **MULTI-FUNCTIONAL TURN SIGNAL LAMP FOR BICYCLE**

(30) Priority: 14.11.2013 KR 20130138573; 14.11.2013 KR 20130138574
(71) Applicant: Lee, Sang-lae, Anyang-si, Gyeonggi-do 430-821 (KR)
(72) Inventor: Lee, Sang-lae, Anyang-si, Gyeonggi-do 430-821 (KR)
(74) Representative: Twelmeier Mommer & Partner
(86) International application number: PCT/KR2014/005552
(87) International publication number: WO 2015/072644

(57) **Abstract**

The present invention relates to a turn signal lamp for a bicycle, which can be used such as fixedly or detachably installed on the end portion of a bicycle handlebar, and equipped with LEDs on the end portion of the handlebar so as to perform multi-functions such as a turn signaling, a head lighting or a brake signaling and additionally terminals installed so as to enable a removable storage to be attached and detached thereto and thus enable listening to music through a speaker using power of a battery when the removable storage is inserted.

## Description

### TECHNICAL FIELD

The present invention relates to a multi-functional turn signal lamp for bicycle, more particularly, relates to a multi-functional turn signal lamp used fixedly (or detachedly) installed at the end of the bicycle handlebar, wherein the lamp has an array of LEDs(light emitting diodes) that may have multi-functions including turn signaling, brake signaling, head lighting, and blinking to notice position, wherein it is possible to indicate the breadth of the bicycle by lighting on both lamps installed at both the left and right ends of the bicycle handlebar, thereby the identification of the bicycle may be achieved easily from the front and the rear directions of the bicycle, and wherein optionally the lamp may connect to a removable data storage device and/or charge a mobile device.

### BACKGROUND ART

Recently, the roads for bicycle riding and the populations enjoying bicycle riding have been increased. Typically a conventional bicycle handlebar has only grips held by user's hands, and provides only a simple function for steering directions of the bicycle.

In other words, a conventional bicycle has no means as to notice the direction which the bicycle would turn for other persons who are coming or going to near the bicycle.

That is, a car has turn signal lamps installed at the left and right of the car, each of which may blink so that the driver of the car could easily notice the car's traveling directions to other drivers. In case of bicycle, however, there are no means as to signal the directions which the bicycle would turn, to other bicycle users.

Further, in case of a conventional bicycle having turn signal lamps, the turn signal lamps are installed on the bicycle with rather short distance between them. Thus, from the turn signal lamps with short distance between them, it is not easy by other bicycle users to identify which direction the bicycle would turn to.

Also, a conventional bicycle does not have a brake signal lamp. Therefore, when the rider of a bicycle would stop abruptly or smoothly, there is practically no easy way to signal the stop of the bicycle or the speed change of the bicycle, so the possibility of the rear-end collision between bicycles are high.

### DISCLOSURE

### TECHNICAL CHALLENGES

The present invention is to solve the conventional drawbacks described. An object of the present invention is to provide a multi-functional turn signal lamp for bicycle used fixedly (or detachedly) installed at the end of the bicycle handlebar, wherein the lamp may be operated by a battery installed on it, wherein the battery may be rechargeable even when the lamp detached from the handlebar, and/or wherein the lamp may include an array of LEDs that have multi-functions including turn signaling, head lighting, brake signaling and speed change signaling etc.

Another object of the present invention is to provide a multi-functional turn signal lamp for bicycle, which can be controlled for emitting a same color light at a plurality of bicycles in the pack riding which may be led by a bicycle in center or front position of the pack, for safe bicycle riding.

Yet another object of the present invention is to provide a multi-functional turn signal lamp for bicycle, which may provide augmented visual effects of safety by indicating the breadth of the bicycle and by signaling stop signs to other bicycle riders when it was turned on in night, and wherein, for example, as for a night light option, the lamp installed on each side of the front of a bicycle may have high brightness and its luminous intensity may be adjusted.

And yet another object of the present invention is to provide a multi-functional turn signal lamp for bicycle, which may be easily manipulated by its rider since it is installed on the bicycle handlebar, wherein the distance between two lamps is much wider than that between the conventional lamps, and wherein the turn signal may be indicated as soon as the bicycle changes its traveling directions.

### TECHNICAL SOLUTIONS

To achieve the objects mentioned above, according to one aspect of the present invention, there is provided a multi-functional turn signal lamp for bicycle comprising means for fixing to the end of bicycle handlebar, wherein the lamp may comprise a charge terminal for recharging the battery in a module which can be removed from it. The cover of light source of the lamp may be formed from, for example, acryl (or semi-transparent PC) etc. The light source of the lamp may comprise a plurality of LEDs, emitting lights into the front direction of the bicycle, or being used as a turn signaling, for example.

And an embodiment of multi-functional turn signal lamp for bicycle according to the present invention may have auxiliary functions such as charging, inputting data from a mobile device, and outputting sound by a speaker so that the rider of the bicycle could listen to music from the mobile device or could supplying electric power to the mobile device.

### ADVANTAGEOUS EFFECTS

According to the present invention, the lamp can be used as fixedly or detachably installed at the end of conventional bicycle handlebar, wherein a rider of a bicycle may operate a turn signal lamp and at the same time operate a signal sound generator by pressing a suitable key button, wherein the rider may control the lamp to blink (for an emergency signal or an alarm signal) and to signal a speed increase or a speed decrease. And according to the present invention, if the rider grips the hand brake lever, the lamp may operate to signal the brake operation and same time an alarm sound may be outputted, so that a visual and audio effect can be presented when the bicycle performs brake operation.

In the case of the night bike riding with the lamp powered on, the present invention may provide an augmented visual effect for the breadth of the bicycle, stop sign, and safety sign, etc. When the LEDs of the lamp comprise an adjustable high brightness light source, the lamp can provide a night lighting function optionally.

The present invention may provide a charging function. For example, when the battery of the mobile device such as a smart phone or other convertible mobile devices have discharged, the present invention may be connected to the mobile device using a cable with connect jacks and may be used to recharge the battery of the mobile device so that the mobile device can be usable thereafter.

The present invention may provide a means to easily detach it from the bicycle handlebar, such as a ring installed at a lock cover.

Also the present invention may provide a music listening function such that it has insert terminals and a speaker. For example, user can listen to the music by inserting a memory device including user-desirable contents, such as a mobile data storage device, a smart phone, or any other mobile sound source device, to the insert terminals.

### BRIEF DESCRIPTION OF THE DRAWINGS

**FIGS**. **1-9** illustrates first embodiment according to the present invention,
**FIG. 1** is a block diagram of an embodiment according to the present invention,
**FIG. 2** is a cross-sectional view illustrating a combined state of a turn signal lamp for bicycle in an embodiment according to the present invention,
**FIG. 3** is a perspective view illustrating a cover part removed from a grip part, in an embodiment according to the present invention,
**FIG. 4** is a diagram illustrating the cover part including a charge terminal and a mobile device insert, in an embodiment according to the present invention,
**FIG. 5** is a diagram for describing the grip part which is installed in or removed from inside of a handlebar, in an embodiment according to the present invention,
**FIG. 6** is a detailed diagram illustrating an LED part, in an embodiment according to the present invention,
**FIGS. 7(A), 7(B), and 7(C)** are diagrams for three examples of turn on states of the LED part, in an embodiment according to the present invention,
**FIG. 8** is a diagram illustrating examples of manual signals for bicycle.
**FIG. 9** is a diagram illustrating bicycle handlebars of flat bar type and drop bar type which may be employed for embodiments according to the present invention,
**FIGS. 10-26** illustrates second embodiment according to the present invention,

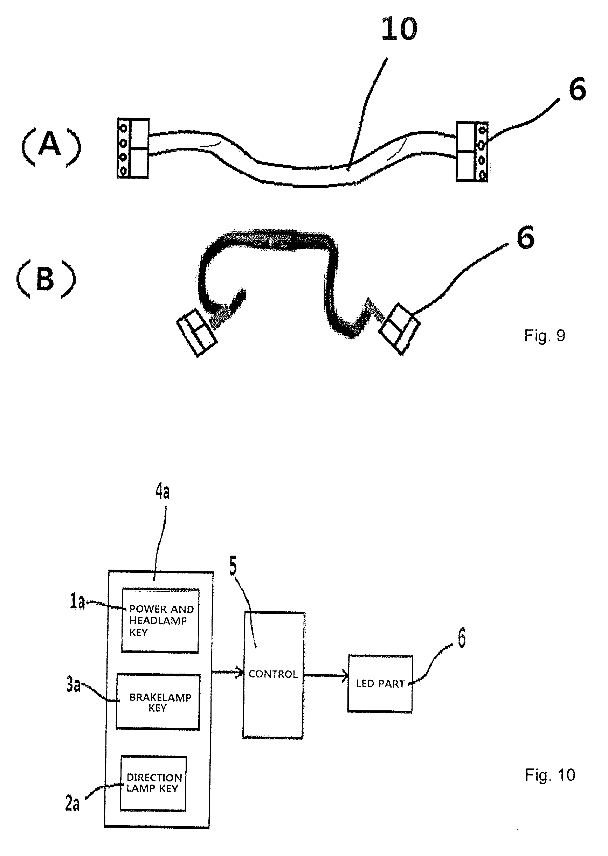

**FIG. 10** is a block diagram of an embodiment according to the present invention,

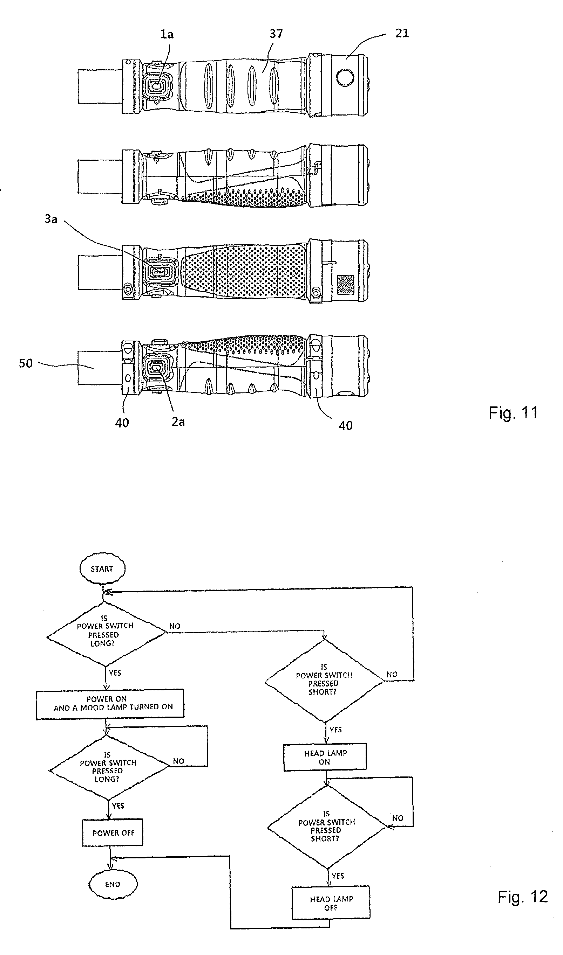

**FIG. 11** is four side views for describing operating states for a head lamp, a brake lamp and a direction lamp, and **FIG. 12** is a flow chart of control operations for controlling electric power switches and the operating states of the head lamp, in an embodiment according to the present invention,

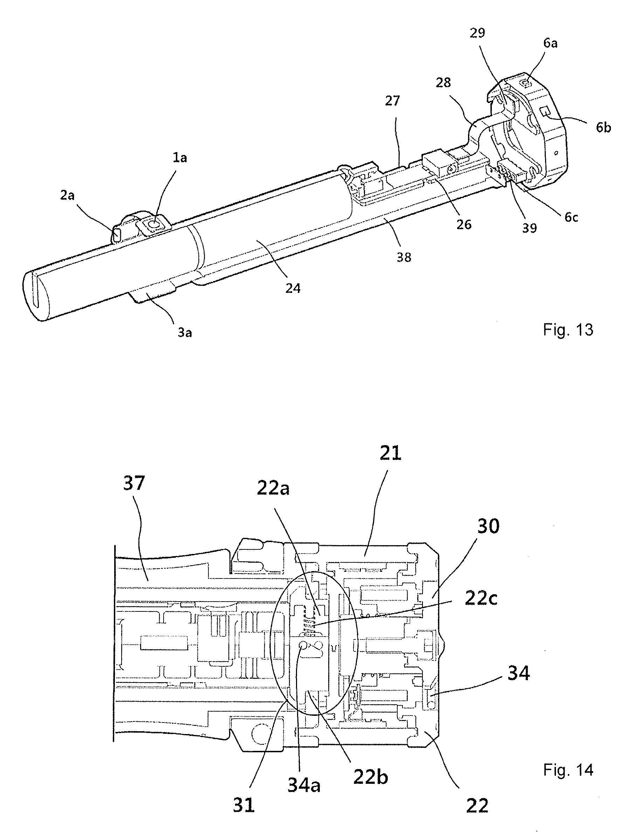

**FIG. 13** is a diagram for describing the inner structure of the grip part, in an embodiment according to the present invention,
**FIG. 14** is a diagram illustrating a hook lock state, in an embodiment according to the present invention,

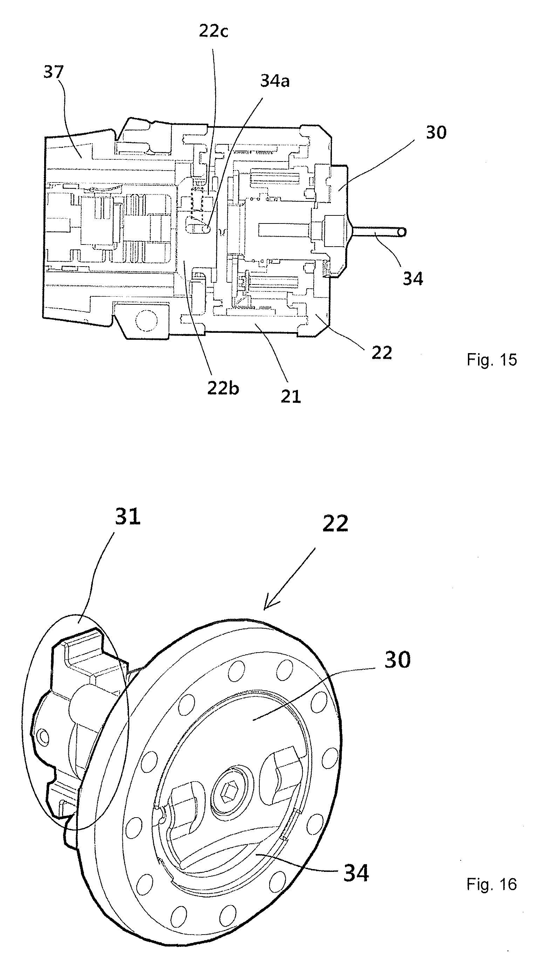

**FIG. 15** is a diagram illustrating a hook open state, in an embodiment according to the present invention,
**FIG. 16** is a diagram illustrating a hook lock state in a lock bundle structure, in an embodiment according to the present invention,

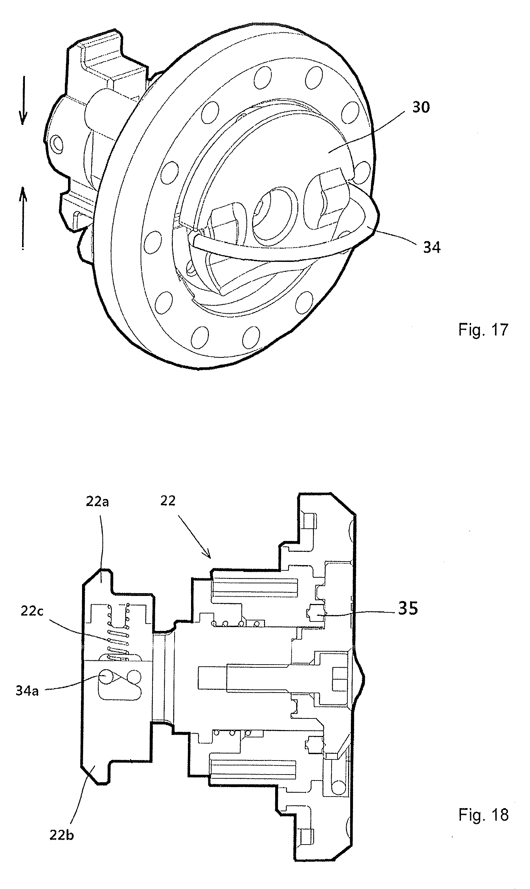

**FIG. 17** is a diagram illustrating a hook open state in a lock bundle structure in an embodiment according to the present invention,
**FIG. 18** is a diagram illustrating a water-proof structure of the lock bundle, in an embodiment according to the present invention,

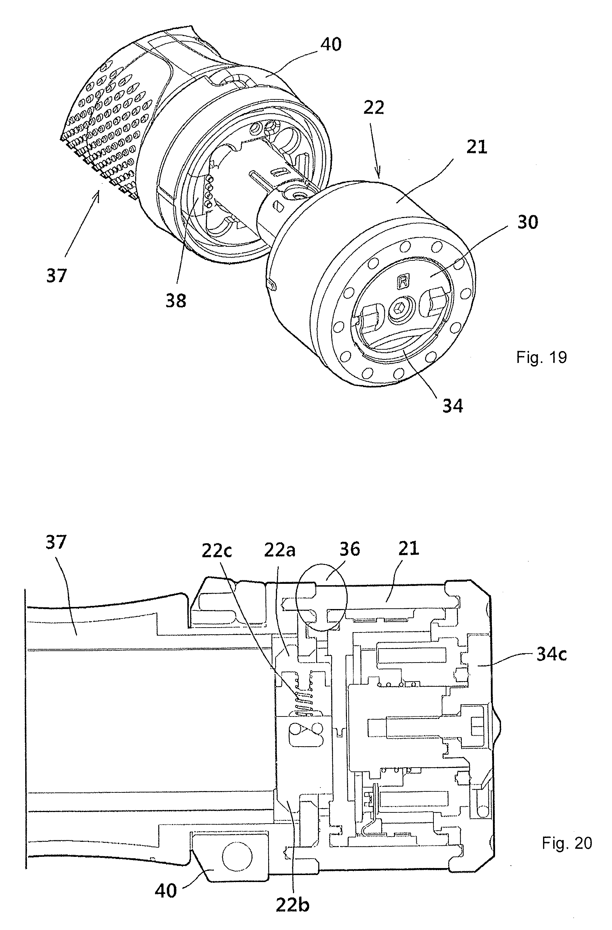

**FIG. 19 and FIG. 20** are diagrams illustrating a water-proof structure for an embodiment according to the present invention,

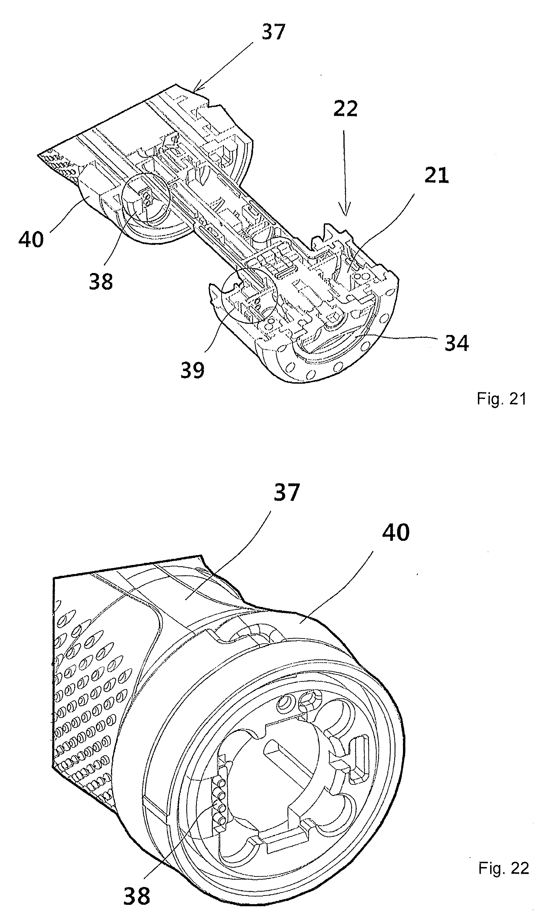

**FIG. 21** is a diagram illustrating a connection structure of the grip part using pogo pin connector, in an embodiment according to the present invention,

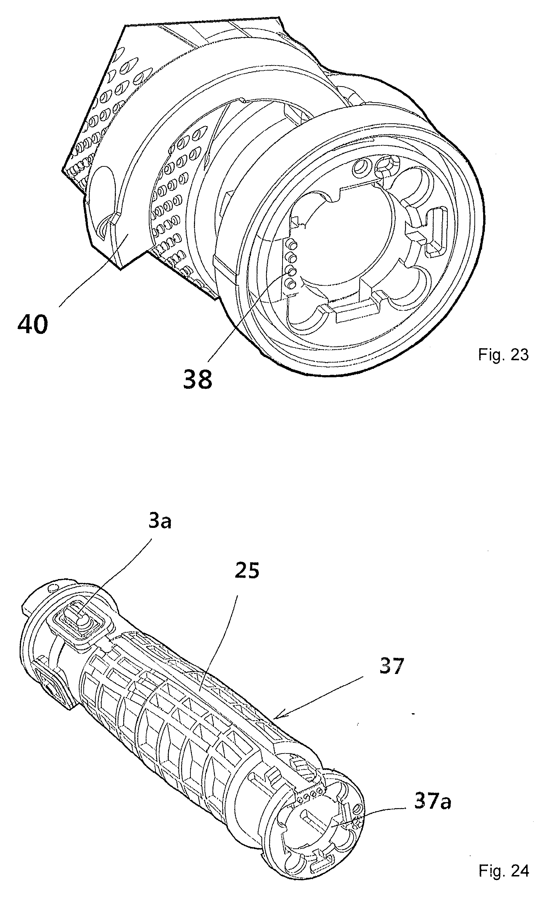

**FIG. 22** **and** **FIG. 23** are diagrams illustrating a clamping structure of the grip part using clamp connection structure, in an embodiment according to the present invention,
**FIG. 24** is a diagram illustrating an insert molding structure of the grip part employed FPCB(Flexible Printed Circuit Board), in an embodiment according to the present invention,

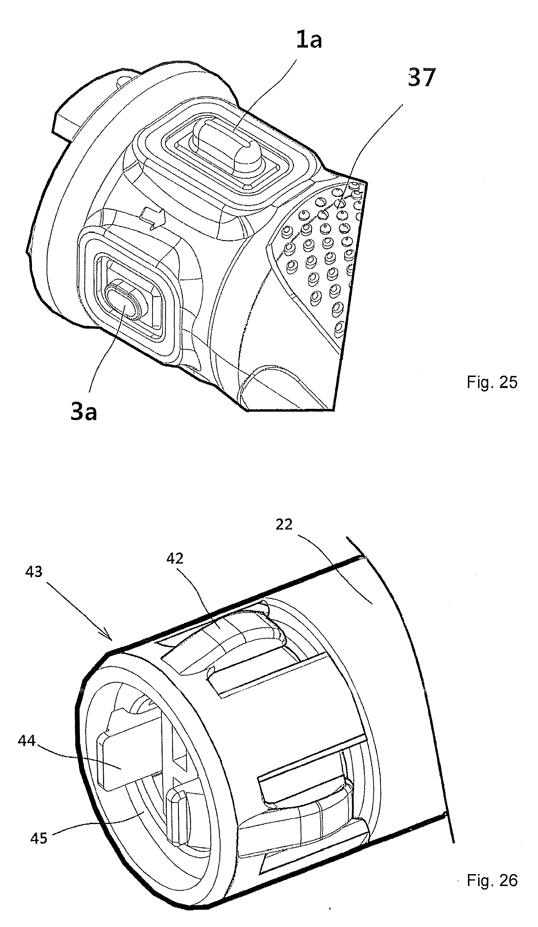

**FIG. 25** is a diagram illustrating key buttons assembled with the grip part, in an embodiment according to the present invention,
**FIG. 26** is a diagram illustrating a circular ring having elastic pieces at the end of a module, in an embodiment according to the present invention,

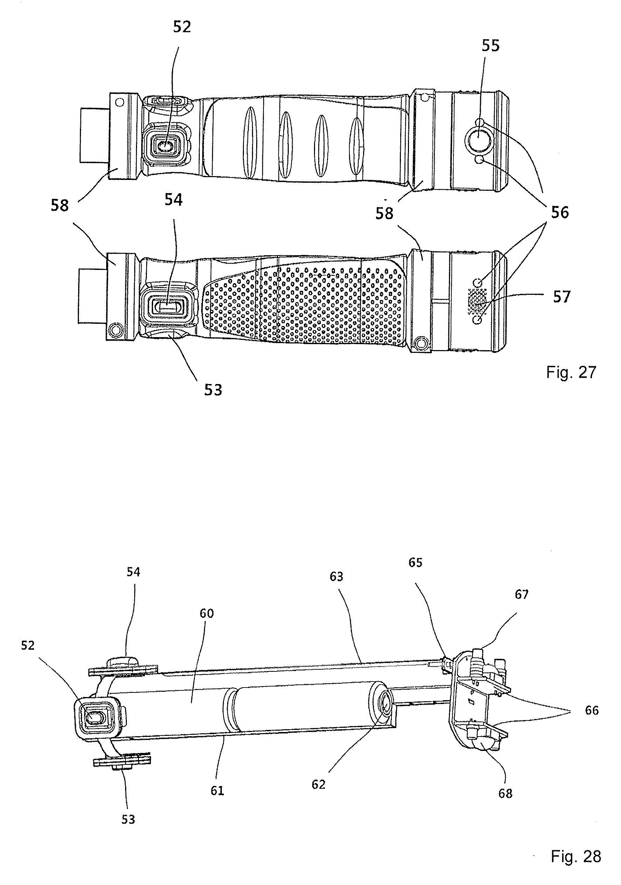

**FIGS. 27-30** illustrates third embodiment according to the present invention,
**FIG. 27** is outside views illustrating a grip part having a key part, in an embodiment according to the present invention,
**FIG. 28** is a diagram illustrating inside structure of a grip part and a module part, in an embodiment according to the present invention,

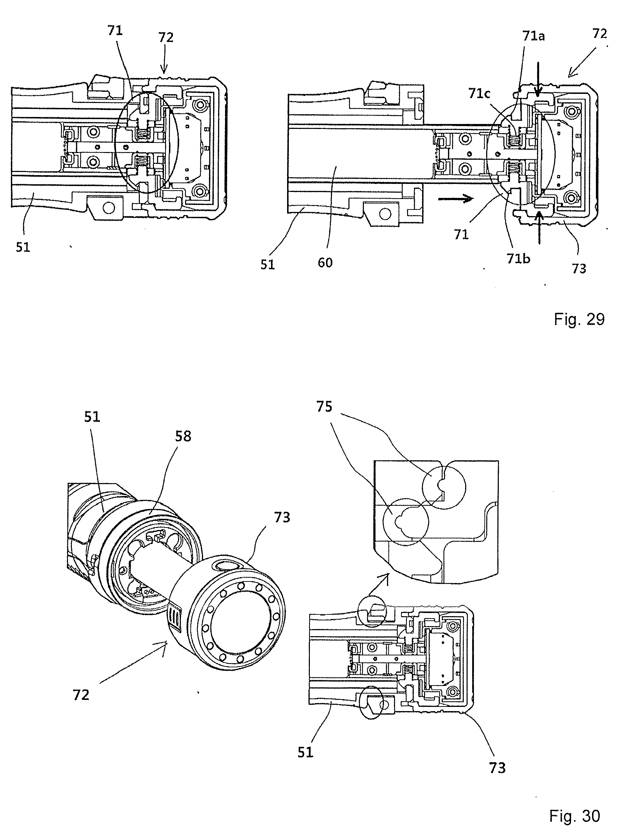

**FIG. 29** is diagrams illustrating removal process of the module part from the grip part using a hook connector, in an embodiment according to the present invention, and
**FIG. 30** is diagrams illustrating a water-proof structure for an embodiment according to the present invention.

### MODES TO PRACTICE THE INVENTION

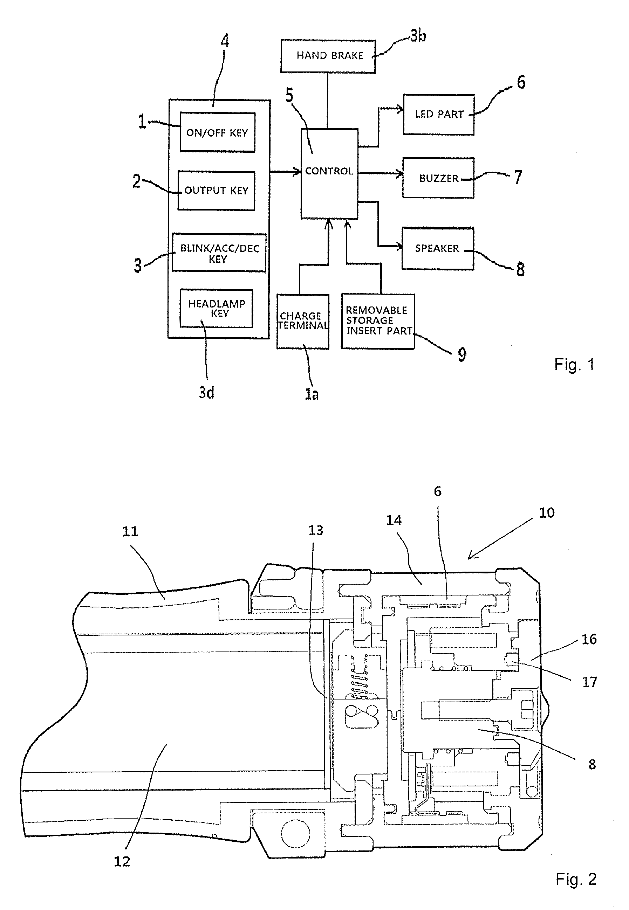

The first embodiments according to the present invention will be hereinafter described in detail with reference to **FIGS.1-9****.**

**FIG. 1** is a block diagram of an embodiment according to the present invention comprising, a key part 4 including an on/off key 1, an output key 2, a blink/acceleration/deceleration key 3, and a head lamp key 3d; a hand brake 3b to brake the bicycle wheels when the rider holds it with the handlebar; a controller 5 to perform control operations corresponding to the signals received from the key part 4 and the hand brake 3b; a LED part 6 including a plurality of LEDs which may be turned on or off by control of the controller 5; a buzzer 7 to generate alarm sounds by control of the controller 5; a speaker 8 to generate audio output by control of the controller 5; and an insert part 9 for mobile data storages connected to the controller 5 to communicate signals.

As for an example, the on/off key 1 may be an alternating type switch such that it turns to ON state when pressed once, and then it turns to OFF state when pressed again.

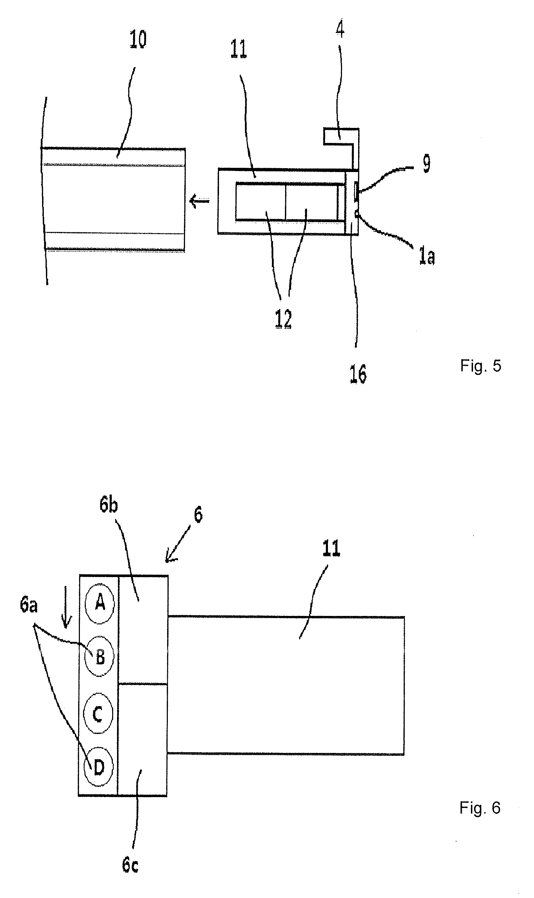

As for an example, when the on/off key 1 is ON state, LEDs 6a and 6c are lighted to act as a breadth lamp, wherein LED 6c is lighted as a tail light(see **FIG.6**).

If the output key 2 is pressed when the on/off key 1 is ON state, audio sounds may be outputted. If the blink/acceleration/deceleration key 3 is pressed when the on/off 1 is ON state, an LED 6a may be blinked to indicate an alarm signal or an emergency state. If the deceleration key is pressed when the on/off key 1 is ON state, LED lamps of the LED 6a may be slowly blinked from above LED lamp to below LED lamp to indicate a speed decreasing state. And if the acceleration key is pressed when the power key 1 is ON state, LEDs may be rapidly blinked instead to indicate a speed increasing state.

As for an example, the blinking speed of acceleration state may be a 2-fold or a 3-fold than that of deceleration state. In addition, sounds suitable for situations may be outputted during lamp blinking states.

If the head lamp key 3d is pressed, an LED of high brightness 6b may be lighted. When the hand brake 3b is held by a hand, only the brake lamp 6c may be lighted.

As for an example, the LED part 6 may be installed on the inner circular circumference part of a cover part 16, wherein the lamps of the LED part 6 may be evenly spaced apart along a line, or along a plurality of lines.

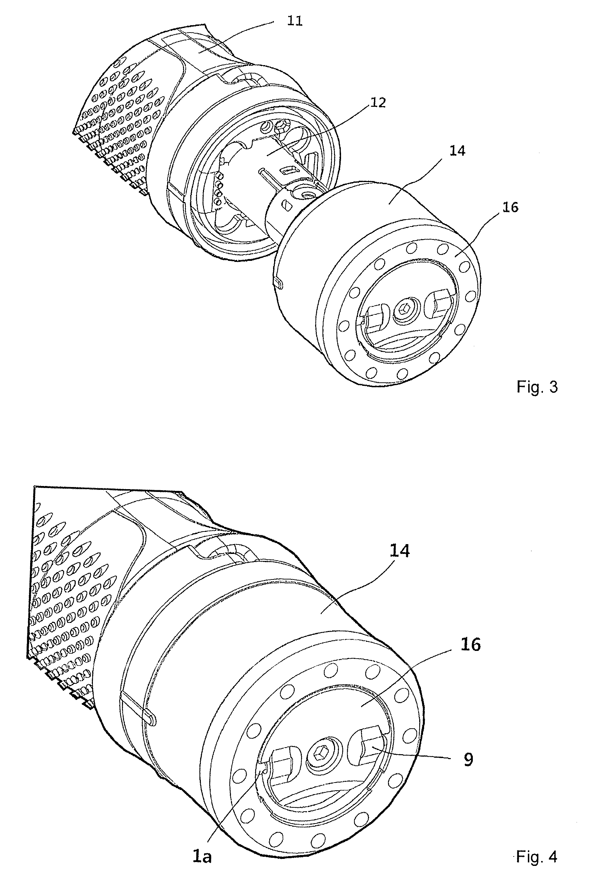

**FIG. 2** is a cross-sectional view illustrating a combined state of the present invention, and **FIG. 3** and **FIG. 4** illustrate a combined and a divided state of a grip part 11 with the handlebar 10. In this example of the present invention, the grip part 11 is formed to be inserted to the inside of the conventional bicycle handlebar. A battery part 12 is installed in the grip part 11, and electrically connected to a terminal formed at the grip part 11. A circuit board 13 is connected to the battery part 12. A LED part 6 has a plurality of LED lamps and is connected to the circuit board 13. A speaker is installed at a cover part 16. A lighting part 14 is formed as to direct lights from the LED part 6 into outside. A key part is installed at the grip part 11. And the number 17 non-described in the drawings is a water-proof O-ring to make it possible to use in rainy days.

**FIG. 5** is for describing the grip part 11 installed in or removed from inside of a handlebar 10, in an embodiment according to the present invention. For an example that the key part 4 is formed at the cover part 16, it is desirable that the key part 4 is contacted and fixed onto the upper surface of the handlebar 10 when the grip part has been inserted in the handlebar 10. And the cover part 16 may be comprised of a charge terminal 1a or an insert for mobile data storage 9.

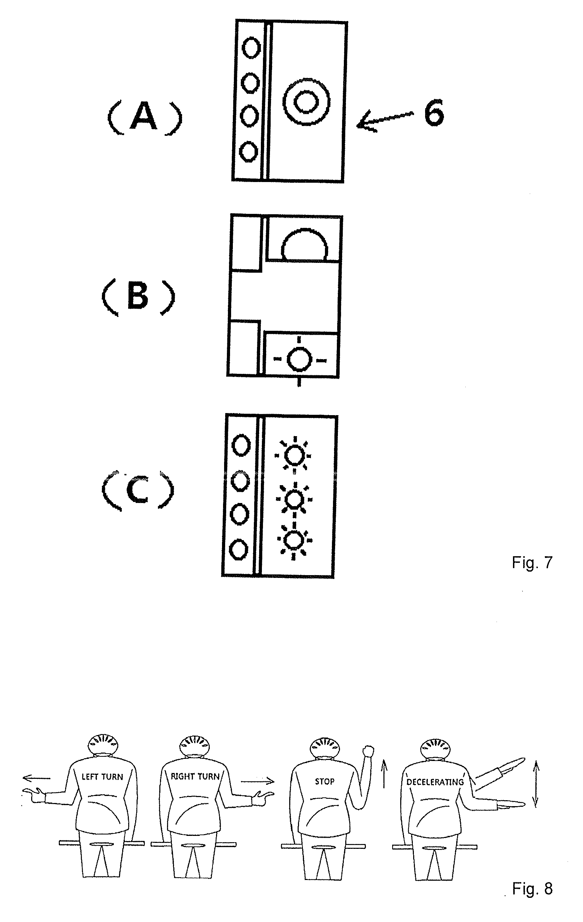

**FIG. 6** and **FIGS. 7(A), 7(B), and 7(C)** illustrate constitution of the LED part and its turn on states, in an embodiment according to the present invention. **FIG. 8** illustrates examples of manual signals that may be applied for a bicycle in an embodiment according to the present invention.

**FIG. 9** is a diagram illustrating bicycle handlebars of flat bar type (A) and drop bar type (B) which may be employed for embodiments according to the present invention.

As for an example, the LED part 6 may be installed at positions of minimum 100mm to maximum 500mm from the center of the handlebar 10.

The operation of the present invention configured as described above will be hereinafter described.

For an example of fixed type, the present invention may be used as it is fixed at the handlebar 10 such as a conventional bicycle handlebar, including a battery. While for an example of removable type, as shown in **FIG. 5****,** at first the rubber part of the end of the metal handlebar 10, such as a conventional bicycle handlebar, may be removed, and then the grip part 11 of the invention may be inserted into the inside of the metal handlebar 10.

Here, the types of bicycle handlebar 10 may include, as shown in FIG. 9, flat bar type (including Riser bar, and H bar) and drop bar type (including, bull-horn bar, and moustache bar). The flat bar type of bicycle handlebar, as it is, may be employed to the present invention. While the drop bar type of bicycle handlebar may be employed via a multi-link to the present invention.

For example, the LED part 6 of the present invention may be installed on a back mirror, or on the end of the bicycle handlebar via a multi-link, in case that the bicycle handlebar is a drop bar type.

The battery part 12 is inserted inside the grip part 11 and supplies electric power to each of the components. The battery part 12 and the cover part 16 are formed as a single body. Therefore, the battery part 12 may be removed when the cover part 16 is opened, and may be recharged using a common recharging means.

And, a power terminal is formed at inside the grip part 11 such that, when the battery part 12 is inserted into the grip part 11, then the power terminal at inside the grip part 11 is contacted with the power terminal of the battery part 12 to be supplied electric power from it.

For example, user may insert the battery part 12 into the grip part 11, rotate the cover part 16 to push the battery part 12 to be pressed against the inside of the grip part 11, and press the on/off key 1 once, then electric power may be supplied from the battery part 12 to the LED part 6, so that the LEDs 6a and 6c of the LED part 6 can be lighted and can emit lights toward the outside the LED part 6 via the lighting part 14.

For example, the LED part 6 according to the present invention may have functions for communicating rider's traveling intends and alarms at day and night, in addition for indicating brake operation. And the LED part 6 may blink to indicating acceleration or deceleration operations. If the blink/acceleration/deceleration function is selected, the lamps may be toggled between blinking steadily, slowly, or rapidly. In case of deceleration, the lamps may be slowly blinked from above to below to indicate a speed decreasing state. And in case of the acceleration, the lamps may be rapidly blinked in the opposite direction to indicate a speed increasing state.

At night, the lighted LED part 6 may provide an augmented visual effect for the breadth of the bicycle, stop sign, and safety, etc. When the LEDs of the lamp comprise a high brightness and adjustable luminous intensity source, the turn signaling lamp can provide a night lighting function optionally.

For example, if the on/off key 1 is ON state at night, referring to FIG. 6, at first the LEDs 6a and 6c are lighted to act the breadth lamp. And if user holds the hand brake 3b, then only the LEDs 6c of the rear are lighted to indicate the brake state now to the rear direction.

For example, if the blink/acceleration/deceleration key 3 of the key part 4 is pressed once, the LEDs 6a are lighted by control of the controller 5 to act as a turn signaling lamps, and if the blink/acceleration/deceleration key 3 is selected and pressed again, the blinking function is changed to acceleration and deceleration functions wherein the LEDs 6a may be lighted sequentially from above to below, that is, in **A-B-C-D** order, or in opposite direction, and in different blinking speed to indicate speed decreasing or increasing states. At the same time, signal sounds suitable for situations may be outputted via a buzzer so that the states may be indicated clearly.

The selected lighting or blinking of the LED part 6 according to the present invention, as described above referring to **FIG. 6****,** is corresponded to the common manual signals used in bicycle riding field as shown in **FIG. 8****.** In the manual signals, the left turn is indicated by the left hand, the right turn is indicated by the right hand. In the case of stop, it is indicated by raising the right hand up. And deceleration is indicated by repeatedly swinging the right hand up and down.

If necessary, user may press the head lamp key 3d of the key part 4, so the LED 6b including high brightness LED lamps can be lighted and act as a head lamp emitting lights forward. It is desirable that the LED 6b includes 2 or 3 high brightness LED lamps so that the light amount emitted forward from the LED 6b could be adjusted.

**FIG. 7** illustrates the states of the LED part 6 according to the cases described above referring to **FIG. 6****,** wherein (A) is a view of LED part state seen from the front of the bicycle, (B) is a view of LED part state seen from the rider on the bicycle, and (C) is a view of LED part state seen from the rear of the bicycle.

In this example, the (B) view of LED part state is desirable, since the view of LED part state seen from the rider on the bicycle does not need to be bright so that the rider may not be blinded by it.

Particularly, for example, in case of pack riding of a plurality of bicycles, the present invention may provide that a LED part 6 can be adjusted to emit light having a certain color so that the colors of the light of the group of bicycles may be a same color. This color may be used as a group mark to distinguish between a group of bicycles and another group of bicycles. Even if many groups of bicycles are traveling at the same time at the same road, a group of bicycles marked by a certain color of light may be controlled and led by a bicycle in front position of the group so that the group of bicycles could be traveling safely.

In addition, it is obvious that the LED part may be formed to emit light toward side directions of the bicycle handlebar (i.e., left and right directions).

The speaker 8 is integrally formed with the cover part 16. The speaker 8 is connected to the circuit board 13 installed between the battery part 12 and the LED part 6. The controller 5 may control the speaker 8 to output the signals received from the mobile storage insert terminal part 9.

As shown in **FIG. 5****,** the charge terminal 1a for charging mobile devices may be installed at outside of the end of the cover part 16. For example, if a mobile device has discharged during riding on the bicycle and has to be recharged, the mobile device may be connected to the charge terminal 1a, for example via a connect cable for charging inserted to the charge terminal 1a and the mobile device, so that the mobile device can be recharged by the electric power of the battery part 12.

Also, the mobile storage insert terminal part 9 may be installed at outside of the end of the cover part 16. For example, when the output key 2 is in ON state, a memory device contained music data may be inserted into the mobile storage insert terminal part 9, so that the music from the memory device can be outputted via the speaker 8.

Meanwhile, for example, if the rider of the bicycle wants to ride simply with all of the functions described above deactivated, the rider may press the on/off key 2 of the key part 4 so that the ON state of the on/off key 2 can become to OFF state for blocking the electric power. As a result, the LED part 6 may be turned off, and all of other memory operations and sound output operations may be deactivated.

For example, embodiments according to the present invention, as shown in FIG. 5, may be used such that the grip part 11 is fixed to the bicycle handlebar 10. For another example, embodiments according to the present invention may be detachably inserted into the conventional bicycle handlebar so that can perform various functions for more safe and convenient bike riding.

As described above, embodiments of the present invention may be applied to the bicycle handlebar, but not limited to this case. For example, the LED part 6 in embodiments of the present invention may be installed at the back mirror (or the side mirror, or the driving mirror) of the bicycle to perform related functions described above.

The second embodiments according to the present invention will be hereinafter described in detail.

**FIG. 10** shows a key part 4a in the second embodiments according to the present invention. The key part 4a may comprise a power and head lamp key 1a, a direction lamp key 2a, and a brake lamp key 3a. The controller 5 may control the LED part 6's light to be turned on or off according to the key signals of the key part 4a.

**FIG. 11** is a diagram for describing the operating states of the key part 4a installed at the grip part 37. (A) and (B) show that the head lamp is turned on when the power and head lamp key 1a is pressed and becomes to ON state, wherein if it is pressed for a predetermined long time then the power is turned on and a mood lamp can be lighted on, while if it is pressed for a predetermined long time once again then the electric power is turned off.

While if the key is pressed for a predetermined short time then the head lamp may be lighted on. If it is desirable to turn off the head lamp, then the key may be pressed for a predetermined short time once again so that the head lamp can be turned off.

(C) shows the operation state of the brake lamp key 3a, wherein if the key is pressed for a predetermined short time then the brake lamp may be lighted on for 5 seconds and then turned off, if the key is pressed continuously then the brake lamp may be lighted on continuously, until the pressure on the key has lifted so that the lamp may be turned off.

In an embodiment of the present invention, the charge indicating function may be provided such that one or more lamps of the LED part 6 may be lighted on for indicating the charging operation being performed.

(D) illustrates the operation state of the direction lamp key 2a, wherein if the key is pressed for a predetermined short time once, for example for the direction lamp function, then the lamp may be turned on to blink for 5 to 10 seconds and then turned off. When it is desirable to perform the mood lamp function, the key is pressed for a predetermined long time once so that three lamps may be lighted on, until the key is pressed for a predetermined long time once again so that the three lamps may be turned off.

When the direction lamp key 2a is operated, four lamps of the LED part 6 of the lighting part 21 may be blinked at the same time by control of the controller 5.

In this example, a clamp 40 may be installed in a groove with a predetermined depth formed on both ends of the grip part 37 made of rubber materials. When the bicycle handlebar 50 is inserted to the grip part 37, and the clamp 40 is clamped down, the grip part 37 of rubber materials is clamped strongly and fixed onto the bicycle handlebar 50 by the clamp 40.

**FIG. 13** is a diagram for describing the inner combining structure of the grip part 37, in an embodiment according to the present invention, wherein 1a indicates the power and head lamp key, 2a indicates the direction lamp key, 3a is the brake lamp ley, 24 indicates the battery, 38 indicates a FPCB, 26 indicates a DC jack, 27 indicates PCB PCM, 28 indicates FPCB controller, 29 indicates PCB controller, 6a indicates a LED lamp for flash lighting, 6b indicates a LED lamp for direction signaling, and 6c indicates a LED lamp for brake signaling.

**FIG. 14** shows a hook lock state, and **FIG. 15** shows a hook open state. If it is desirable to detach the module 22 from the grip part 37, then user may pull back the ring 34 and move it to right. Then the locker part 30 connected to the ring 34 is also pulled, and the pin 34a is moved horizontally to the right so that the hook jaw portions of the hook top 22a and the hook bottom 22b can be detached and the hook top 22a and the hook bottom 22b can be moved toward the center, as a result, the module 22 may be detached from the grip part 37.

In other words, when the pin 34a moves to the right, due to the triangle structure in the hook top 22a and the hook bottom 22b, the hook top 22a moves downward and the hook bottom 22b moves upward so that the module can be detached from the grip part 37.

At this time, the spring 22c installed between the hook top 22a and the hook bottom 22b becomes compressed.

After that, if the user insert the module 22 into the grip part 37, then the hook top 22a and the hook bottom 22b detached by the pin 34a may be returned to their original positions by the return force of the spring 22c, and then the hook jaw portion may be hooked, so that the module 22 may be combined strongly with the grip part 37.

**FIG. 16** and **FIG. 17** illustrate a lock bundle structure. As shown in FIG. 16, when the ring 34 is in the inserted state, the pin 34a is in the locked state. While as shown in **FIG. 17****,** when the ring 34 is in the pulled back state, the pin 34a is ins the opened state.

That is, as shown in **FIG. 17****,** if the ring 34 is pulled back and right, then parts of the hook 31 moves upward and downward of the directions shown by arrows, and releases into the opened state from the locked state.

**FIG. 18** illustrates a water-proof structure of the lock bundle structure, wherein the O-ring 35 is installed to water-proof the inner side of the module part 22.

**FIG. 19 and FIG. 20** illustrate a water-proof structure. The grip part 37 may be made of rubber materials. The water-proof structure is formed by clamping of the clamp 40 such that the gap space between the rubber materials and the plastic materials does not exist, or the rubber materials and the plastic materials may be overlapped, so that the assembly can be water-proofed.

**FIG. 21** illustrates a connection structure of the grip part 37 and the module part 22.

When the module part 22 is attached or detached, the FPCB 38 and the pogo pin 39 are attached or detached to each other using protruded structures. When attached, they are electrically connected and may communicate signals with each other.

In other words, when the functional key buttons of the grip part 37 are operated, suitable circuits may be connected to the module 22 via the FPCB 38 and the pogo pin 39, so that the functions can be performed through the lighting part 21.

**FIG. 22** **and** **FIG. 23** illustrate the coupling structure of the clamp 40 of the grip part 37. By opening/locking a part the clamp 40 from/down the other part of the clamp 40, the grip part 37 may be coupled strongly onto the bicycle's metal (or aluminum) handlebar 50. Or alternatively by using a screw type of the clamp 40, the same can be achieved.

**FIG. 24** illustrates an insert molding structure of the grip part 37 employed FPCB. A groove may be formed on the molded grip 37a, and FPCB 38 may be inserted into the groove for electrically connecting with the keys of the key part 4a, and then the grip part 37 may be formed over it.

In this example, the FPCB 38 may be connected with the power and head lamp key 1a, the direction lamp key 2a, as well as the brake lamp key 3a, included in the key part 4a, as shown in **FIG. 1****.**

**FIG. 25** is for describing the assembly structure of the key part 4a installed at the grip part 37. The power and head lamp key 1a, the direction lamp key 2a, and the brake lamp key 3a are installed under a rubber cover, such that each of the keys may be pressed and turned on by means for pressing corresponding position of the rubber cover.

**FIG. 26** illustrates a circular ring 43 formed elastic pieces at the opposite of the module 22. When the grip part 37 according to the present invention is inserted and combined to the bicycle handlebar 50, the hook 44 integrally formed with the module 22 may be inserted and combined with the hook jaw 45 at the inner side of the circular ring 43. At the same time, a plurality of elastic pieces 42 at outer circumference of the circular ring 43 may be combined strongly while being elastically extended or shrunk according to the thickness of the bicycle handlebar 50, so that the module 22 can be fixed un-waveringly onto the bicycle handlebar 50.

The third embodiments according to the present invention will be hereinafter described in detail with reference to **FIGS.27-30****.**

**FIG. 27** illustrates outside views of a grip part 51. The key part may comprise a power and head lamp key 52, a direction lamp key 53, and a brake lamp key 54. According to the key signals of the key part, the controller (not shown) may control to turn on or off a head lamp 55, a direction lamp 56, or a brake lamp 57, each of which comprises at least one LED.

In the drawings, non-described number 58 is the clamp installed at both ends of the grip part 51. The clamp may fix strongly the grip part 51 onto the bicycle handlebar 59.

Considering the operation of the key part, in case of the power and head light key 52, if the key is pressed for a long time then the electric power is turned on and at the same time a mood lamp is lighted on. While if the key is pressed for a long time once again the electric power is turned off.

In case of the head lamp should be turned on or off, if the key is pressed for a short time then the head lamp is turned on. While if the key is pressed for a short time once again the head lamp is turned off.

Considering the operation of the brake lamp key 54, if the key is pressed for a short time then the brake lamp may be lighted on for 5 seconds and then turned off, if the key is pressed continuously then the brake lamp may be lighted on continuously, until the pressure on the key has lifted so that the lamp may be turned off.

In an embodiment of the present invention, the charge indicating function may be provided such that one LED may be lighted on for indicating the charging operation being performed.

And, considering the operation of the direction lamp key 53, if the key is pressed for a short time once, in the direction lamp function, then the lamp may be turned on to blink for 5 to 10 seconds and then turned off. When it is desirable to perform the mood lamp function, the key is pressed for a long time once so that three lamps may be lighted on, until the key is pressed for a long time once again so that the three lamps may be turned off.

When the direction lamp key 53 is operated, a plurality of LEDs in the silicon cap 73 may be blinked at the same time according to the control of the controller.

In this example, a clamp 58 is installed in a groove with a predetermined depth formed on both ends of the grip part 51 made of rubber materials. After the grip part 51 is inserted to the bicycle handlebar, the clamp 58 may be locked up so that the grip part 51 of rubber materials can be clamped strongly and fixed onto the bicycle handlebar.

**FIG. 28** is a diagram illustrating inside structure of a grip part 51, in the present embodiment, comprising a common battery 60 for supplying electric power, three keys 52 to 54 described above, a (-) terminal 61 and a (+) terminal 62, a FPCB 63, PCB PCM 64, a pogo pin 65, an LED board 66, a plurality of LEDs 67, and LEDs 68 installed at opposite position of the LEDs 67.

**FIG. 29** illustrates a hook structure, and **FIG. 30** illustrates a water-proof structure. In **FIG. 29****,** the left drawing illustrates a hook lock state, while the right drawing illustrates a hook open state, in which the module 72 is detached from the grip part 51.

If it is desirable to detach the module 72 from the grip part 51, then user may held with fingers upper and bottom surfaces of the silicon cap 73 and press down. Then the corresponding portions may be pressed in as indicated by arrows, and the upper hook 71a and the bottom hook 71b connected this pressed in portions may be moved to the center.

Thus, the upper hook 71a and the bottom hook 71b of the hook part 71 are detached from the hook jaw, so that the hook part 71 can be detached. As a result, the entire module 72 including the silicon cap 73 can be detached out of the grip part 51.

At this time, the spring 71c elastically installed between the upper hook 71a and the bottom hook 71b becomes a depressed state due to being pressed by the hooks.

Thus, as shown in **FIG. 28****,** in the state the module 72 is detached, the battery 60 can be replaced by new ones.

After that, if it is desirable to combine the module 72 and the grip part 51, then the user may hold the module by pressing the upper and bottom surfaces of the silicon cap 73 of the module 72 with the user's fingers, and then may press the hook part 71 of the module 72 against the grip part 51, and then may remove the hand held the silicon cap. Then the hooks may be returned to their original positions moving upward and downward by the return force of the spring 71c pressed between the upper hook 71a and the bottom hook 71b. As a result, the hooks are hooked by the hook jaw, so that the module 72 may be combined strongly with the grip part 51.
**FIG. 30** illustrates a water-proof structure according to the present invention. As shown in the drawing, at the contact portion of the silicon cap 73 and the grip part 51, two-fold water proof structures 75 are formed so that the water cannot infiltrate into the module 72.

In this example, the end of the silicon cap 73 is overlapped on the end of the grip part 51 made of rubber materials so that the water proof structure can be provided.

And, when the keys of the grip part 51 are operated, the electric power of the battery 60 may be supplied to the LEDs 67 and 68, via pogo pin 65, through the FPCB 63, and the (-) terminal 11 and the (+) terminal 62, so that the corresponding LED can be lighted on or turned off according to the key operations.

For example, the LEDs 67 and the LEDs 68 are installed at opposite position to each other. The LEDs 67 act as the head lamp 5, while the LEDs 68 act as the brake lamp.

And the other LEDs around the LEDs 67 and 68 may act as the direction lamp 56, which may signal turn directions at the time of the bike riding.

### Description of the Reference Numerals in the Drawings

1:on/off key, 2:output key
3:blink/acceleration/deceleration key, 4,4a:key part
5:controller, 6: LED part
7:buzzer, 8:speaker
9:mobile storage insert terminal, 10: handlebar
11,37:grip part, 12:battery part
13:circuit board, 14,21:lighting part
16:cover part, 17:0-ring
22:module, 24:battery
38:FPCB, 26:DC jack
27:PCB PCM, 28:FPCB controller
29:PCB controller, 30:lock cover
31,44:hook, 34:ring
37:grip part, 39:pogo pin
40:clamp, 42:elastic pieces
43:circular ring, 45:hook jaw

## Claims

1. A multi-functional turn signal lamp for bicycle, comprising:
a grip part 11 installed at the end of a bicycle handlebar, and comprising a key part 4 which includes an on/off key 1, an output key 2, a blink/acceleration/deceleration key 3, and a head lamp key 3d;
a battery part 12 positioned in the grip part 11, and electrically connected to a terminal installed at the grip part 11;
a circuit board 13 connected to the battery part 12;
a LED part 6 electrically connected to the circuit board 13, and including a plurality of LEDs;
a cover part 16 including speaker 8; and
a lighting part 16 formed to emit lights of the LED part 6 toward various directions

2. The multi-functional turn signal lamp for bicycle of Claim 1, wherein
the LED part 6 is comprised to be installed on a back mirror, or on the end of the bicycle handlebar via a multi-link, in case that the bicycle handlebar is a drop bar type, and
the LED part 6 is installed at positions of minimum 100mm to maximum 500mm from the center of the handlebar 10.

3. The multi-functional turn signal lamp for bicycle of Claim 1, wherein
the LED part 6 is installed on the inner circular circumference part of a cover part 16, wherein the lamps of the LED part 6 may be evenly spaced apart along a line, or along a plurality of lines; and
the LED part 6 comprises a plurality of LEDs 6a for providing direction signal, breadth signal, acceleration signal, and deceleration signal; LEDs 6c acting as a brake lamp; and LEDs 6b acting as a head lamp with high brightness.

4. The multi-functional turn signal lamp for bicycle of Claim 1, wherein a charge terminal 1a for charging mobile devices and a mobile storage insert terminal part 9 are installed at the key part 4.

5. A multi-functional turn signal lamp for bicycle, comprising:
a grip part 37 installed at the end of a bicycle handlebar, and having a key part 4a which includes a power and head lamp key 1a, an direction lamp key 2a, and a brake lamp 3a;
a module 22 attached or detached to the grip part 37 by hook.
a battery part 24 positioned in the grip part 37, and electrically connected to a terminal installed at the grip part 37 and a LED part 6 which comprises LEDs for a flash lamp 6a, LEDs for a direction lamp 6b, and LEDs for a break lamp 6c;
a lighting part 21 installed at the module 22, and formed to emit lights of the LED part 6 toward various directions; and
a ring 34 for performing a hook on and a hook off, and installed at the end of the module 22.

6. The multi-functional turn signal lamp for bicycle of Claim 5, wherein if the ring 34 is pulled back, then a locker part 30 is also pulled, then the pin 34a is moved horizontally, then the hook top 22a and the hook bottom 22b of a hook 31 is moved toward the center, and then the module 22 is detached from the grip part 37.

7. The multi-functional turn signal lamp for bicycle of Claim 5 or 6, wherein the O-ring 35 is installed for water-proofing inner side of the module part 22.

8. The multi-functional turn signal lamp for bicycle of Claim 5, wherein when the module part 22 is attached to the grip part 37, the FPCB 38 and the pogo pin 39 are attached to each other, and communicate signals with each other.

9. The multi-functional turn signal lamp for bicycle of Claim 5, wherein
a clamp 40 is installed at each end of the grip part 37; and
using means clamping or opening the clamp 40, the module 22 is fixed un-waveringly onto the bicycle handlebar 50.

10. The multi-functional turn signal lamp for bicycle of Claim 5, further comprising:
a pair of hook 44 are formed at the end of the module 22; and
a circular ring 43 having a plurality of elastic pieces 42 formed at its circumference and a hook jaw 45 formed at its inner side,
wherein the hook 44 is inserted and fixed at the hook jaw 45, and the elastic pieces 42 elastically are combined according to the thickness of the bicycle handlebar 50.

11. A multi-functional turn signal lamp for bicycle, wherein a module 22 is attached or detached to a grip part 51,
wherein a key part comprises a power and head lamp key 52, an direction lamp key 53, and a brake lamp 54;
wherein according to the key signals of the key part, a controller controls the lighting on or off of a head lamp 55, a direction lamp 56, and a brake lamp 57, each of which comprises at least one LED;
wherein a clamp 58 is installed on each end of the grip part 51 for fixing the grip part 51 strongly to the bicycle handlebar 59;
wherein the key part is connected to a LED PCB 66 via a FPCB 63 and a pogo pin 65;
wherein the LED PCB 66 is connected to the (-) terminal 61 and (+) terminal 62 of a battery 60; and
wherein a hook part 71 is installed at inside of a silicon cap 73 of the module 72 for attaching or detaching the module 72 to the grip part 51.

12. The multi-functional turn signal lamp for bicycle of Claim 1, wherein the hook part 71 comprises an upper hook 71, an bottom hook 71b, and a spring 71c elastically installed between these hooks.

13. The multi-functional turn signal lamp for bicycle of Claim 1, wherein at the contact portion of the silicon cap 73 and the grip part 51 in the inside of the silicon cap 73, two-fold water proof structures 75 are formed.
